# EUROPÄISCHE PATENTANMELDUNG

(11) **EP 4 316 927 A1**
(43) Veröffentlichungstag der Anmeldung: **07.02.2024**
(21) Anmeldenummer: 23189469.2
(22) Anmeldetag: 03.08.2023
(51) Int. Cl.: B60T 8/172, B60W 40/068, B60W 60/00

(54) **VERFAHREN ZUR ERMITTLUNG EINER FAHRBAHNBESCHAFFENHEIT UND GESCHWINDIGKEITSREGULIERUNG**

(30) Priorität: 03.08.2022 DE 102022119464
(71) Anmelder: Ullrich, Günter, 46562 Voerde (DE); Bauder, Frank, 72650 Beuren (DE); Schumacher, Rolf, 79183 Waldkirch (DE)
(72) Erfinder: Ullrich, Günter, 46562 Voerde (DE); Bauder, Frank, 72650 Beuren (DE); Schumacher, Rolf, 79183 Waldkirch (DE)
(74) Vertreter: Demski, Siegfried

(57) **Zusammenfassung**

Die Erfindung betrifft ein Verfahren zur Ermittlung einer Fahrbahnbeschaffenheit und Geschwindigkeitsregulierung, insbesondere für fahrerlose Transportfahrzeuge, umfassend zumindest eine Fahrzeugsteuerung 4 und eine Auswerteeinheit 6 sowie wenigstens ein mitlaufendes Messrad 7 mit Fahrbahnkontakt. Um eine optimale Fahrzeuggeschwindigkeit zu erreichen, wird ein Verfahren sowie eine Vorrichtung vorgeschlagen, mit der die Bestimmung des Reibwertes zwischen Messrad 7 und Fahrbahn 3 erfolgen kann, um in der Fahrzeugsteuerung 4 den ermittelten Wert zur Geschwindigkeitsanpassung zu verwenden, wobei vorgesehen ist, dass
- eine Erhöhung einer Bremskraft auf das Messrad 7 erfolgt, bis das Messrad 7 blockiert
- eine Speicherung der Blockade-Bremskraft erfolgt
oder
- eine Beschleunigung auf das Messrad 7 erfolgt, bis das Messrad 7 durchrutscht
- eine Speicherung der Antriebskraft erfolgt
- Auswertung der Blockade-Bremskraft oder Antriebskraft zur Berechnung eines Reibwertes zwischen Messrad 7 und Fahrbahn
- Anpassung der Fahrzeuggeschwindigkeit an den aktuellen Reibwert durch die Fahrzeugsteuerung 4
- zyklisches Wiederholen der Messung und Berechnung des Reibwertes sowie
- Anpassung der Fahrzeuggeschwindigkeit.

## Beschreibung

Die Erfindung betrifft ein Verfahren zur Ermittlung einer Fahrbahnbeschaffenheit und Geschwindigkeitsregulierung für fahrerlose Transportfahrzeuge, umfassend zumindest eine Fahrzeugsteuerung und eine Auswerteeinheit sowie wenigstens ein mitlaufendes Messrad mit Fahrbahnkontakt.

Fahrerlose Transportfahrzeuge werden als mobile Roboter in der Intralogistik in Form von automatisierten Radfahrzeugen eingesetzt. Der Einsatz erfolgt vorzugsweise auf einem Betriebsgelände mit fahrerlosen Transportfahrzeugen, innerhalb oder außerhalb von Gebäuden. Dies schließt aber grundsätzlich nicht aus, dass die Transportfahrzeuge sich auch im öffentlich zugänglichen Bereich bewegen können.

Unter einem fahrerlosen Transportfahrzeug versteht man ein flurgebundenes Fördermittel mit eigenem Fahrantrieb, welches automatisch gesteuert und berührungslos geführt wird. Derartige fahrerlose Transportfahrzeuge dienen dem Materialtransport, und zwar zum Ziehen oder Tragen von Fördergut mit aktiv- oder passiven Lastaufnahmemitteln. Die Tragfähigkeit derartiger Transportfahrzeuge reicht von wenigen Kilogramm bis fünfzig Tonnen oder sogar mehr.

Derartige fahrerlose Transportfahrzeuge müssen hohe Sicherheitsanforderungen erfüllen, beispielsweise muss sichergestellt sein, dass Hindernisse oder auf dem Betriebsgelände vorhandene Personen im Bereich der Fahrwege sofort erkannt werden, um rechtzeitig ein Bremsmanöver einzuleiten. Aus diesem Grunde sind fahrerlose Transportfahrzeuge üblicherweise mit Sicherheits-Laserscannern am Fahrzeug ausgestattet, die Hindernisse oder Personen detektieren, um über eine Fahrzeugsteuerung einen Bremsvorgang einzuleiten.

Diese Vorgehensweise ist deshalb von besonderer Bedeutung, weil die fahrerlosen Transportfahrzeuge mit maximal möglicher Geschwindigkeit fahren sollen, um eine hohe Transportleistung zu erzielen.

Sowohl im Außen- wie auch im Innenbereich muss jederzeit sichergestellt sein, dass das automatisch fahrende Transportfahrzeug vor einem Hindernis, beispielsweise stehende oder liegende Personen, rechtzeitig bremsen kann und zum Stillstand kommt. Ein derartiger Bremsvorgang ist insbesondere im Außenbereich natürlich von äußeren Witterungsverhältnissen abhängig, wobei die Fahrbahneigenschaften im Winter und Sommer unterschiedlichen Bedingungen unterworfen sind. Um das Transportfahrzeug rechtzeitig abzubremsen, ist es daher von größter Bedeutung, dass die maximal mögliche Bremskraft zwischen den Rädern und der Fahrbahn bekannt ist. Dazu müssen die Reibwerte ermittelt werden.

Diese Reibwerte (auch Haftreibungskoeffizient oder Reibungszahl genannt) ergeben sich aus dem Quotienten der Reibkraft durch die Anpresspresskraft (auch Normalkraft oder Gewichtskraft genannt). Zum Beispiel ist bei einem Vierradfahrzeug die Anpresskraft pro Rad in etwa 1/4 x Fahrzeuggewicht x Erdbeschleunigung von g=9,81 m/s². Hierbei spielt es keine Rolle, ob die Räder als Luft-, Vollgummi oder Vulkollanreifen ausgebildet sind.

Ein Haftreibungskoeffizient hängt von der jeweiligen Kombination des Rades und der Fahrbahnoberfläche ab, wobei ein großer Einfluss durch die Witterungsbedingungen, z.B. Glätte aufgrund von Schnee, Eis oder Raureif oder eine nasse Oberfläche aufgrund von Regen oder Reinigungsaktivitäten zu berücksichtigen ist.

Darüber hinaus können Öle oder Fette auf der Fahrbahn verteilt sein, beziehungsweise es kann Schmutz oder Laub auf der Fahrbahn liegen, wodurch ebenfalls der Haftreibungskoeffizient beeinflusst wird. Die Fahrbahn kann ferner durch ständiges Befahren in einer identischen Spur abgefahrene Stellen, Schlaglöcher oder Rollsplit aufweisen oder es kann sich um unterschiedliche Fahrbahnoberflächen handeln, die zu einer Änderung des Haftreibungskoeffizienten führen.

Hinzu kommt im Weiteren, dass sich der Reibwert auf den Fahrspuren mit der Zeit verändern kann, weil automatische Transportfahrzeuge mit einer hohen Genauigkeit in exakt den gleichen Spuren fahren. Solange die Fahrzeugsteuerung den genauen Wert der Reibwerte nicht kennt, darf die Fahrgeschwindigkeit nur minimal eingestellt werden, um unter allen Umständen ein sicheres Bremsen zu gewährleisten. Da sich der Reibwert jederzeit gravierend ändern kann, ist die Bestimmung dieser Größe von großer Bedeutung, um mit hoher Geschwindigkeit fahren zu können.

Frontal richten sich die Reibwertinformation direkt an einen Fahrer, was jedoch bei fahrerlosen Transportfahrzeugen nicht möglich ist. Zum Teil werden diese Informationen über die fahrzeugeigenen Reifen ermittelt, die gerade bei einer Kurvenfahrt zu einer starken Beeinflussung führt, weil Kräfte auf die Fahrzeugreifen einwirken, welche beispielsweise durch die Lenkwinkel der Reifen beeinflusst werden und somit der exakte Reibwert der Fahrbahn nicht einwandfrei ermittelt werden kann.

Um die maximal mögliche Fahrzeuggeschwindigkeit zu ermitteln, liegt der vorliegenden Erfindung die Aufgabenstellung zugrunde, ein Verfahren und eine Vorrichtung zur Durchführung des Verfahrens aufzuzeigen, um den Reibwert der Fahrbahn zu ermitteln, damit die Fahrzeugsteuerung die jeweils maximale Geschwindigkeit auswählen und das Transportfahrzeug vor Hindernissen rechtzeitig abbremsen kann.

Zur Lösung der Aufgabenstellung ist vorgesehen, dass zumindest ein mitlaufendes Messrad dem Transportfahrzeug zugeordnet ist, welches in Fahrbahnkontakt steht und das Verfahren folgende Schritte umfasst:
- eine Erhöhung einer Bremskraft auf das Messrad erfolgt, bis das Messrad blockiert
- eine Speicherung der Blockade-Bremskraft erfolgt oder
- eine Beschleunigung auf das Messrad erfolgt, bis das Messrad durchrutscht
- eine Speicherung der Antriebskraft erfolgt
- Auswertung der Blockade-Bremskraft oder Antriebskraft zur Berechnung eines Reibwertes zwischen Messrad und Fahrbahn
- Anpassung der Fahrzeuggeschwindigkeit an den aktuellen Reibwert durch die Fahrzeugsteuerung
- zyklisches Wiederholen der Messung und Berechnung des Reibwertes sowie
- Anpassung der Fahrzeuggeschwindigkeit.

Das Verfahren geht davon aus, dass auf ein mitlaufendes Messrad mit Fahrbahnkontakt entweder eine Bremskraft einwirkt und diese erhöht wird bis eine Blockade eintritt oder dass das Messrad beschleunigt wird, bis ein Durchrutschen erfolgt. Durch die Bremskraft beziehungswese Beschleunigung wird somit erreicht, dass der direkte Fahrbahnkontakt des Messrades mit der Fahrbahn durch den entstehenden Schlupf verloren geht und zu einer veränderten Umfangsgeschwindigkeit führt. Hierbei wird die Bremskraft erfasst, bei der das Messrad blockiert und ebenso die Beschleunigung, bei der das Messrad durchrutscht. Aus den gespeicherten Werten erfolgt anschließend die Berechnung eines Reibwertes der Fahrbahn. Die Fahrzeugsteuerung reguliert die Fahrzeuggeschwindigkeit anschließend nach dem aktuell ermittelten Reibwert zwischen Messrad und Fahrbahn, sodass das Transportfahrzeug ggf. mit einer reduzierten Geschwindigkeit weiterfahren kann, die die Sicherheit bietet, dass das Transportfahrzeug vor einem Hindernis rechtzeitig zum Stehen kommt. Das Verfahren sieht weiterhin vor, dass diese Messungen zyklisch wiederholt werden und der Reibwert jeweils aktuell neu berechnet wird, um die Fahrzeuggeschwindigkeit ständig anzupassen. Die Zykluszeiten können hierbei auf das kleinste mögliche Zeitmaß reduziert werden, sodass Änderungen der Fahrbahnbeschaffenheit sofort erkannt werden und eine schnelle Reaktion auf Fahrbahnveränderungen erfolgen kann.

Bei der Durchführung einer solchen Messung wird die Bremskraft auf das Messrad solange erhöht, bis das Messrad blockiert und somit nicht mehr mit der Fahrzeuggeschwindigkeit läuft. Exakt zu diesem Zeitpunkt entspricht die Blockade-Bremskraft linear dem Reibwert, sodass nach Bestimmung der Blockade-Bremskraft diese an die Fahrzeugsteuerung übermittelt werden kann und die Bremse gelöst wird. Im Anschluss kann sofort die nächste Bestimmung der Blockade-Bremskraft erfolgen, um einen neueren aktuellen Wert an die Fahrzeugsteuerung zu übermitteln. Alternativ besteht die Möglichkeit das Messrad gezielt zu beschleunigen, sodass sukzessive ein gesteigertes Antriebsmoment auf das Messrad übertragen wird, bis dieses Moment ausreicht, um das Messrad durchrutschen zu lassen. In einem solchen Fall dreht das Messrad plötzlich schneller als bei der aktuellen Fahrgeschwindigkeit des Transportfahrzeuges. Aus diesem Rutschwert bzw. dem Beschleunigungswert lässt sich der Reibwert ebenfalls berechnen. Bei der Variante zur Aufnahme der Messung mithilfe einer Beschleunigung besteht zudem der Vorteil, dass die Werte auch beim Anfahren bzw. Wiederanfahren des Transportfahrzeuges nach einem Fahrzeugstopp fehlerfrei erfasst werden können.

In Ausgestaltung der Erfindung ist vorgesehen, dass die beiden Messverfahren miteinander kombiniert werden und zunächst eine Bremsung eingeleitet wird und nach Ermittlung der Blockade-Bremskraft und Lösen der Bremse eine Beschleunigung des Messrades erfolgt, um die Antriebskraft bis zum Durchrutschen zu ermitteln, sodass im stetigen Wechsel eine Bremsung und eine Beschleunigung erfolgt, um die Genauigkeit des Verfahrens der Reibwert-Bestimmung zu steigern. Diese hybride Variante hat durch den Einsatz zweier unabhängiger Verfahren sicherheitstechnisch Vorteile gegenüber der Verwendung von nur einem genannten Verfahren.

Um den Reibwert aus der Bremskraft bzw. Beschleunigungskraft und der Anpresspresskraft (auch Normalkraft oder Gewichtskraft genannt) zu ermitteln, ist vorgesehen, dass eine Auswerteeinheit vorhanden ist, die den jeweils aktuellen Reibwert berechnet und der Fahrzeugsteuerung übermittelt, wobei die Auswerteeinheit integraler Bestandteil der Fahrzeugsteuerung sein kann oder als eigenständige Komponente verwendet wird, um aus den ermittelten Werten der Blockade-Bremskraft oder der Antriebskraft einen aktuellen Reibwert zu ermitteln. Eine Abbremsung oder Beschleunigung des Messrads wird durch die Auswerteeinheit gesteuert, um anschließend den Reibwert durch die Auswerteeinheit zu ermitteln. Die Auswerteeinheit liefert ständig den aktuellen Reibwert an die Fahrzeugsteuerung.

Die Messvorrichtung besteht aus der Auswerteeinheit, dem Messrad und einer zugeordneten Bremseinrichtung und Antriebsseinheit sowie einer gefederten Aufhängung und einer Drehzahlmesseinrichtung (Inkrementalgeber oder Encoder genannt).

Mithilfe einer Drehzahlmesseinrichtung kann die Geschwindigkeit des Messrades bestimmt werden und zusätzlich der Drehwinkel durch einen Inkrementalgeber ermittelt werden, wobei zu diesem Zweck beispielsweise opto-elektronische Codierscheiben zur Abtastung bereitgestellt werden oder mithilfe von Magnetfeldsensoren und Dauermagneten eine Drehposition bestimmt wird. Ebenso können digitale Encoder verwendet werden.

In weiterer vorteilhafter Ausgestaltung der Erfindung ist vorgesehen, dass eine Energieversorgung der Fahrzeugsteuerung, der Recheneinheit und der Drehzahlmesseinrichtung sowie die Funktionen des Bremsens und Beschleunigens über die Energieversorgung des Fahrzeuges erfolgt. Die Transportfahrzeuge mit eigenem Antrieb verfügen in der Regel über eine mitgeführte Energieversorgung, über die sowohl die Fahrzeugsteuerung als auch die gesamte Messvorrichtung mit Energie versorgt werden.

Die hier zum Einsatz kommenden fahrerlosen Transportfahrzeuge bilden je nach Antriebskonfiguration mindestens zwei oder mehrere Fahrspuren aus, die überwacht werden müssen, sofern die Bremsleistung in ihnen aufgebracht wird. Dazu kann in jeder relevanten Fahrspur am Fahrzeug ein Messrad angeordnet sein.

Die Einbaulage des Messrades kann beliebig vor, zwischen oder hinter den Fahrzeugrädern gewählt werden, die Fahrspuren der gebremsten Fahrzeugräder sollten möglichst genau überstrichen werden. Die Einbauposition eines solchen Messrades erfolgt hierbei zweckmäßig oder kann unter Berücksichtigung einer möglichen Beschädigung variieren.

Die Besonderheit der vorliegenden Erfindung besteht darin, dass eine mehrfache Sicherheit der Messwerte vorliegt. Einerseits durch zwei unabhängige Verfahren durch Bremsen und Beschleunigen zur Ermittlung des Reibwert und andererseits durch unabhängige Berechnungen der Reibwerte in jeder Spur. Somit können vorhandene unterschiedliche Reibwerte in jeder Spur unter dem Sicherheitsaspekt einer redundanten Messerfassung erfolgen und die Fahrzeuggeschwindigkeit derart angepasst werden, dass nur der vorliegende Reibwert berücksichtigt wird oder beispielsweise der geringere Reibwert für die Geschwindigkeit maßgebend ist.

In weiterer Ausgestaltung des Verfahrens ist vorgesehen, dass die Messung der Blockade-Bremskraft oder Antriebskraft und anschließender Berechnung der Reibewerte zur Anpassung der Fahrzeuggeschwindigkeit in kurzen Zeitintervallen erfolgt. Kurze Zeitintervalle von weniger als einer Minute können hierbei vorgegeben werden.

Zur Lösung der Vorrichtungsaufgabe um das Verfahren durchzuführen, wird zumindest eine Fahrzeugsteuerung und Auswerteeinheit sowie wenigstens ein mitlaufendes Messrad mit Fahrbahnkontakt verwendet, wobei das wenigstens eine Messrad in einer Fahrspur der Laufräder des Transportfahrzeuges angeordnet ist und durch den Fahrbahnkontakt in Drehung versetzt wird und durch eine Bremseinrichtung oder Antriebseinheit die Umlaufgeschwindigkeit des Messrades verändert wird. Das Messrad kann jeweils in einer Fahrspur der Laufräder des Transportfahrzeuges angeordnet werden, damit die Fahrspuren unabhängig voneinander überprüft werden können, wobei das Messrad durch den Fahrbahnkontakt in Drehung versetzt wird und durch eine Bremseinrichtung bzw. Antriebseinheit die Umlaufgeschwindigkeit verändert wird, bis entweder eine Bremsblockade oder ein Durchrutschen des Messrades erfolgt. Die zu diesem Zeitpunkt vorhandene Bremskraft bzw. Antriebskraft wird zur Berechnung des Reibwertes in der Auswerteeinheit verwendet. Hierdurch wird insbesondere durch eine Kombination beider möglichen Messverfahren ein sehr genauer Reibwert ermittelt, wobei die Kombination von Bremsen und Beschleunigen eine doppelte Sicherheit gewährleistet, welche zudem weiter dadurch erhöht werden kann, wenn jeweils ein Messrad in einer Fahrspur angeordnet ist. Die Bestimmung des Reibwertes erfolgt somit mit hoher Genauigkeit, sodass die Fahrzeugsteuerung unter Berücksichtigung des Reibwertes die Geschwindigkeit des Transportfahrzeuges jederzeit anpassen kann und damit eine hohe Bremssicherheit bietet, wenn unerwartete Hindernisse im Bereich der Fahrbahn vorhanden sein sollten.

Um eine Beeinflussung der Reibwertgröße durch das Messrad so gering wie möglich zu halten, wird vorzugsweise ein großes, schmales und leichtlaufendes Rad verwendet, welches quasi gewichtslos auf dem Untergrund abrollt und damit nur eine geringe Beeinflussung der Messwerte erfolgt. Das Messrad ist hierbei federnd aufgehängt, um die Beeinflussung der Messwerte so gering wie möglich zu halten. Mithilfe einer aktiven Feder kann das Messrad mit einer vorwählbaren Anpresskraft auf die Fahrbahn gedrückt werden. Auf diese Weise werden konstante Bedingungen geschaffen, die von einer definierten Anpresskraft ausgehen.

Entscheidend ist, dass ein solches Messrad bzw. die Laufachse des Messrades mit einer Bremse und/oder einem Elektromotor als Antrieb ausgestattet ist, um die notwendigen Bremsmanöver und Beschleunigungsmanöver durchzuführen, wobei im weiteren auch Drehzahlmesseinrichtungen, Inkrementalgeber zur Winkelbestimmung in Form eines Drehwinkelgebers oder digitale Encoder oder Decoder erforderlich sein können.

Der besondere Vorteil der Vorrichtung zur Anwendung des Verfahrens besteht darin, dass die ermittelte Blockade-Bremskraft oder Antriebskraft des Messrades zur direkten Berechnung der Reibwerte führt.

Die vorliegende Erfindung zeichnet sich dadurch aus, dass für fahrerlose Transportfahrzeuge zur Ermittlung der Fahrbahnbeschaffenheit zumindest ein Messrad verwendet wird, welches entweder durch Bremskraft abgebremst wird oder durch einen Beschleunigungsmotor beschleunigt wird, sodass im ersten Fall eine Blockade eintritt und im zweiten Fall ein Durchrutschen des Messrades. Die zu diesem Zeitpunkt ermittelten Werte der Blockade-Bremskraft bzw. der Antriebskraft ermöglichen die Berechnung eines Reibwertes zwischen Messrad und Fahrbahn, um auf diese Weise mithilfe der Fahrzeugsteuerung eine Anpassung der Fahrzeuggeschwindigkeit an den aktuellen Reibwert vorzunehmen. Die Anpassung der Fahrzeuggeschwindigkeit kann in äußerst kurzen Zeitabständen erfolgen, sodass auf plötzlich veränderte Witterungseinflüsse sofort reagiert werden kann. Um die Sicherheit eines solchen fahrerlosen Transportfahrzeuges zu gewährleisten, ist ferner vorgesehen, dass die Messungen zyklisch erfolgen und somit auch die Möglichkeit einer ständigen Anpassung der Fahrzeuggeschwindigkeit gegeben ist.

Die Erfindung wird im Weiteren anhand der Figuren näher erläutert.

Es zeigt
- Figur 1: den prinzipiellen Aufbau einer Messvorrichtung mit Schnittstellen zum fahrerlosen Transportfahrzeug und
- Figur 2: eine Vergrößerung aus Figur 1 mit dem Aufbau des Messrades und weiteren Komponenten.

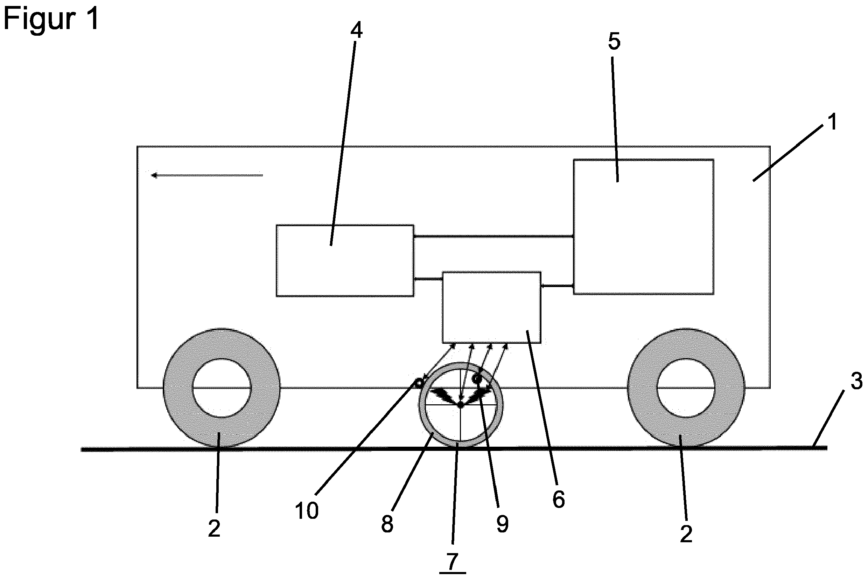

Figur 1 zeigt den prinzipiellen Aufbau einer Messvorrichtung, wie sie zur Durchführung des Verfahrens verwendet werden kann. Ein Transportfahrzeug 1 mit einer Bereifung 2 verfährt selbsttätig auf einer Fahrbahn 3 mithilfe einer Fahrzeugsteuerung 4. Die fahrerlosen Transportfahrzeuge 1 verfügen über einen Energiespeicher 5, aus dem die Antriebsenergie und die Spannungsversorgung für die weiteren Komponenten, insbesondere der Fahrzeugsteuerung 4 zur Verfügung gestellt wird.

Zur Ermittlung der Fahrbahnbeschaffenheit der Fahrbahn 3 ist eine Auswerteeinheit 6 mit einem Messrad 7 vorgesehen. Die Auswerteeinheit 6 liefert die ermittelten und berechneten Daten unter Berücksichtigung der ermittelten Reibwerte zwischen einer Bereifung 8 des Messrades 7 und der Fahrbahn 3 an die Fahrzeugsteuerung 4, damit die Geschwindigkeit des selbstfahrenden Transportfahrzeuges 1 an die Fahrbahnbeschaffenheit der Fahrbahn 3 insoweit angepasst werden kann, dass eine Abbremsung vor einem Hindernis bis zum Stillstand des Transportfahrzeuges 1 erfolgen kann.

Die Fahrbahn 3 kann aufgrund von Witterungsverhältnissen oder Verschmutzungen unterschiedliche Reibwerte aufweisen, sodass eine solche Anpassung der Fahrgeschwindigkeit in kurzen Zeitabständen erforderlich ist. Zu diesem Zweck wird das Messrad 7 über eine Bremseinrichtung 9 abgebremst oder über eine Antriebseinheit 10 beschleunigt. Soweit durch die Abbremsung oder Beschleunigung die Bodenhaftung des Messrades 7 verloren geht, kann aus den Werten der Abbremsung bzw. der Beschleunigung eine Ermittlung des Reibwertes der Fahrbahn 3 erfolgen, die anschließend an die Fahrzeugsteuerung 4 weitergeleitet wird. Auf diese Weise kann in kurzen Zeitabständen eine Aktualisierung der Reibwerte erfolgen und kontinuierlich eine Anpassung der Fahrgeschwindigkeit vorgenommen werden, damit eine Abbremsung vor einem Hindernis zum Stillstand des Transportfahrzeuges 1 führt.

Das schematisch dargestellte Messrad 7 befindet sich im gezeigten Ausführungsbeispiel zwischen der vorderen und hinteren Bereifung 2 des Transportfahrzeuges 1, jedoch besteht ohne Weiteres die Möglichkeit, dass das Messrad 7 vor der Vorderachse oder hinter der Hinterachse angeordnet wird. Da es sich in der Regel um mehrachsige Transportfahrzeuge handelt, die auf jeder Achse eine doppelte Bereifung 2 aufweisen, besteht zudem die Möglichkeit, dass Messrad 7 in jeder Fahrspur unabhängig voneinander einzusetzen, um auf diese Weise auch unterschiedliche Reibwerte verschiedener Fahrspuren korrekt zu ermitteln.

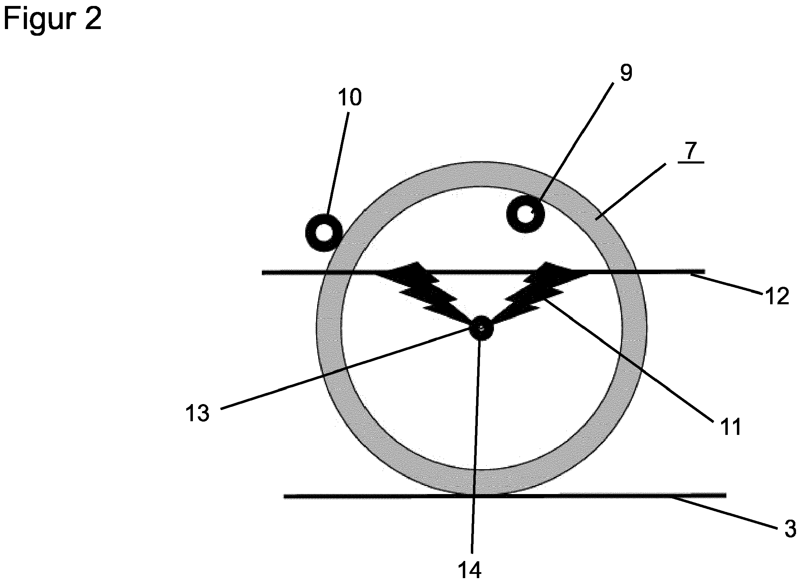

Figur 2 zeigt das Messrad 7, wie es aus Figur 1 bekannt ist, in einer vergrößerten Ansicht. Das Messrad 7 hält Kontakt mit der Fahrbahn 3 und wird durch eine Bremseinrichtung 9 und eine Antriebseinheit 10 gesteuert, um wahlweise das Messrad 7 abzubremsen oder zu beschleunigen. Mit Verlust der Bodenhaftung durch eine Brems-Blockade oder einem auftretenden Schlupf in Form eines Durchrutschen des Messrades 7 kann die jeweilige Bremskraft bzw. Beschleunigungskraft zur Berechnung der Reibwerte verwendet werden.

Das Messrad 7 ist über eine Federung 11 beispielsweise mit einem Fahrzeugrahmen 12 des fahrerlosen Transportfahrzeuges 1 verbunden. Bei der Federung 11 kann es sich um eine aktive Feder handeln, welche das Messrad 7 mit einer exakt definierten Anpresskraft auf die Fahrbahn 3 drückt, sodass die einzelnen Messungen unter konstanten Bedingungen durchgeführt werden. Hierbei besteht ohne weiteres die Möglichkeit, die Anpresskraft des Messrades 7 auf die Fahrbahn 3 in Abhängigkeit des Transportfahrzeuges anzupassen. Die Radnabe 13 des Messrades 7 ist zudem mit einem Inkrementalgeber 14 ausgestattet, um zusätzlich die Drehzahl zu erfassen.

Der Vorteil der Vorrichtung zur Anwendung des erfindungsgemäßen Verfahrens besteht darin, dass in kurzen Zeitabständen der Reibwert der Fahrbahn 3 ermittelt werden kann und hierbei die Möglichkeit besteht, abwechselnd einen Bremsvorgang oder einen Antriebsvorgang des Messrades 7 vorzunehmen. Zudem kann in jeder Fahrspur der Bereifungen 2 des Transportfahrzeuges 1 ein Messrad 7 angeordnet sein, um unterschiedliche Fahrbahnbeschaffenheiten zu berücksichtigen.

### Bezugszeichenliste

- 1: Transportfahrzeug
- 2: Bereifung
- 3: Fahrbahn
- 4: Fahrzeugsteuerung
- 5: Energiespeicher
- 6: Auswerteeinheit
- 7: Messrad
- 8: Bereifung
- 9: Bremseinrichtung
- 10: Antriebseinheit
- 11: Federung
- 12: Fahrzeugrahmen
- 13: Radnabe
- 14: Inkrementalgeber

## Patentansprüche

1. Verfahren zur Ermittlung einer Fahrbahnbeschaffenheit und Geschwindigkeitsregulierung für fahrerlose Transportfahrzeuge (1), umfassend zumindest eine Fahrzeugsteuerung (4) und eine Auswerteeinheit (6) sowie wenigstens ein mitlaufendes Messrad (7) mit Fahrbahnkontakt, wobei
- eine Erhöhung einer Bremskraft auf das Messrad (7) erfolgt, bis das Messrad (7) blockiert
- eine Speicherung der Blockade-Bremskraft erfolgt oder
- eine Beschleunigung auf das Messrad (7) erfolgt, bis das Messrad (7) durchrutscht
- eine Speicherung der Antriebskraft erfolgt
- Auswertung der Blockade-Bremskraft oder Antriebskraft zur Berechnung eines Reibwertes zwischen Messrad (7) und Fahrbahn (3)
- Anpassung der Fahrzeuggeschwindigkeit an den aktuellen Reibwert durch die Fahrzeugsteuerung (4)
- zyklisches Wiederholen der Messung und Berechnung des Reibwertes sowie
- Anpassung der Fahrzeuggeschwindigkeit.

2. Verfahren nach Anspruch 1,
**dadurch gekennzeichnet,**
**dass** die Auswerteeinheit (6) die Bremskraft auf das Messrad (7) kontinuierlich erhöht bis das Messrad (7) blockiert wird.

3. Verfahren nach Anspruch 1 oder 2,
**dadurch gekennzeichnet,**
**dass** die Auswerteeinheit (6) über eine Antriebsvorrichtung, beispielsweise in Form eines Elektromotors, das Drehmoment kontinuierlich erhöht, bis das Messrad (7) durchrutscht.

4. Verfahren nach einem der Ansprüche 1, 2 oder 3,
**dadurch gekennzeichnet,**
**dass** die Messzyklen für eine Bremsung und Beschleunigung abwechselnd erfolgen.

5. Verfahren nach einem der Ansprüche 1 bis 4,
**dadurch gekennzeichnet,**
**dass** Auswerteeinheit (6) integraler Bestandteil der Fahrzeugsteuerung (4) ist oder als eigenständige Komponente eingesetzt wird, um aus den ermittelten Werten der Blockade-Bremskraft oder der Antriebskraft einen aktuellen Reibwert zu ermitteln.

6. Verfahren nach einem der Ansprüche 1 bis 5,
**dadurch gekennzeichnet,**
**dass** die Fahrzeugsteuerung (4) zusätzlich mit einer Drehzahlmesseinrichtung, einem Inkrementalgeber (14) zur Winkelbestimmung in Form eines Drehwinkelgebers oder digitalen Encoders oder Drehgebers ausgestattet ist.

7. Verfahren nach einem der Ansprüche 1 bis 6,
**dadurch gekennzeichnet,**
**dass** eine Energieversorgung der Fahrzeugsteuerung (4), der Auswerteeinheit (6) und der Drehzahlmesseinrichtung sowie der Bremseinrichtung (9) und Antriebseinheit (10) über die Energiespeicher (5) des Transportfahrzeuges vorgenommen wird.

8. Verfahren nach einem der Ansprüche 1 bis 7,
**dadurch gekennzeichnet,**
**dass** zumindest ein Messrad (7) in der Fahrspur links- und/oder rechtsseitig des Transportfahrzeuges (1) angeordnet ist.

9. Verfahren nach einem der Ansprüche 1 bis 8,
**dadurch gekennzeichnet,**
**dass** das zumindest eine Messrad (7) vor dem Vorderrad, zwischen dem Vorder- und Hinterrad oder dem Hinterrad in der jeweiligen Fahrspur angeordnet ist.

10. Verfahren nach einem der Ansprüche 1 bis 9,
**dadurch gekennzeichnet,**
**dass** eine mehrfache Sicherheit der Messwerte vorliegt, einerseits durch zwei unabhängige Verfahren durch Bremsen und Beschleunigen zur Ermittlung der Reibwerte und andererseits durch unabhängige Berechnungen der Reibwerte in jeder Spur.

11. Verfahren nach einem der Ansprüche 1 bis 10,
**dadurch gekennzeichnet,**
**dass** die Messungen der Blockade-Bremskraft oder Antriebskraft und Berechnung der Reibwerte zur Anpassung der Fahrzeuggeschwindigkeit in kurzen Zeitintervallen erfolgt.

12. Vorrichtung zur Durchführung des Verfahrens nach Anspruch 1 bis 11, umfassend zumindest eine Fahrzeugsteuerung (4) und eine Auswerteeinheit (6) und wenigstens ein mitlaufendes Messrad (7) mit Fahrbahnkontakt,
**dadurch gekennzeichnet,**
**dass** das wenigstens eine Messrad (7) in einer Fahrspur der Laufräder des Transportfahrzeuges (1) angeordnet ist und durch den Fahrbahnkontakt in Drehung versetzbar ist, wobei durch eine Bremseinrichtung (9) oder eine Antriebseinheit (10) die Umlaufgeschwindigkeit veränderbar ist.

13. Vorrichtung nach Anspruch 12,
**dadurch gekennzeichnet,**
**dass** das Messrad (7) aus einem großen, schmalen und leichtlaufenden Rad besteht, das federnd aufgehängt ist.

14. Vorrichtung nach Anspruch 12 oder 13,
**dadurch gekennzeichnet,**
**dass** die Laufachse des Messrades (7) mit einer Bremseinrichtung (9) und einem Elektromotor als Antrieb ausgestattet ist oder dass das Messrad (7) mit einer Bremseinrichtung (9) und/oder einer Antriebseinheit (10) ausgestattet ist, welche auf die Lauffläche des Messrades (7) einwirken.

15. Vorrichtung nach Anspruch 12, 13 oder 14,
**dadurch gekennzeichnet,**
**dass** die ermittelte Blockade-Bremskraft oder Antriebskraft des Messrades (7) zur Berechnung der Reibwerte vorgesehen ist.
